# EUROPÄISCHE PATENTSCHRIFT

(11) **EP 3 732 772 B1**
(45) Veröffentlichungstag und Bekanntmachung des Hinweises auf die Patenterteilung: **03.11.2021**
(21) Anmeldenummer: 19704218.7
(22) Anmeldetag: 24.01.2019
(51) Int. Cl.: H02K 9/06, H02K 9/28

(54) **SCHLEIFRINGEINHEIT MIT AKTIVEM KÜHLSYSTEM**
SLIP RING UNIT WITH ACTIVE COOLING SYSTEM
UNITÉ DE BAGUE COLLECTRICE POURVUE DE SYSTÈME DE REFROIDISSEMENT ACTIF

(30) Priorität: 08.03.2018 EP 18160756
(43) Veröffentlichungstag der Anmeldung: 04.11.2020
(73) Patentinhaber: Flender GmbH, 46395 Bocholt (DE)
(72) Erfinder: BINDER, Herbert, 94127 Neuburg (DE)
(74) Vertreter: Michalski Hüttermann & Partner Patentanwälte mbB
(86) Internationale Anmeldenummer: PCT/EP2019/051735
(87) Internationale Veröffentlichungsnummer: WO 2019/170318

(56) Entgegenhaltungen:
- DE-A1-102010 016 930
- DE-C- 853 474
- JP-A- H07 123 648
- JP-A- 2002 130 192

## Beschreibung

Die Erfindung betrifft eine Schleifringeinheit für eine elektrische Maschine, wobei die Schleifringeinheit zur Aufnahme einer Bürstenhaltevorrichtung vorgesehen ist. Die Erfindung betrifft weiter eine elektrische Maschine mit einer derartigen Schleifringeinheit.

Eine derartige Schleifringeinheit für eine elektrische Maschine kommt beispielsweise bei Windkraftanlagen zum Einsatz. Hier besteht der Bedarf, dass die elektrischen Maschinen in Form der Generatoren und ihrer Komponenten immer kompakter werden. Dies führt dazu, dass bei gleichbleibender Baugröße die Schleifringkomponenten immer höher belastet werden, da die Temperaturen, insbesondere von Schleifringen, Schleifringbürsten und Schleifringbürstenhalter häufig stark ansteigen. Somit besteht ein Bedarf, sämtliche Komponenten der elektrischen Maschine, insbesondere auch die Schleifringeinheit möglichst effizient zu kühlen.

In der JP H07 123648 A wird zur Vermeidung von Kurzschlüssen zwischen Stromschienen und Überschlägen und zur Erleichterung der Kühlung der Oberfläche des Kommutators ohne Einbußen beim Wartungsraum ein Verfahren vorgeschlagen, bei dem die Streuung von Kohlenstoffpulver vermieden wird. Ein Hohlkasten besteht aus Isoliermaterial, wobei in dem Kasten in seiner axialen Richtung in der Mitte eine vertikale Trennplatte vorgesehen ist, um eine Luftzufuhrkammer und eine Luftabfuhrkammer zu bilden. Ein Loch ist an der Bodenfläche der Luftzufuhrkammer an der Position ausgebildet, die der Position eines der Bindungsgräben eines Kommutators auf der Führungsseite der Mitte entspricht, und ein Loch ist an der Bodenfläche der Luftzufuhrkammer ausgebildet Luftabzugskammer an der Position, die einem der Bindungsgräben des Kommutators entspricht, der sich auf der Gegenleitungsseite der Mitte befindet. Andererseits sind ein Kühlluftversorgungsrohr und ein Luftauslassrohr mit den oberen Oberflächen der Luftversorgungskammer bzw. der Luftauslasskammer verbunden. Weiter ist ein Bürstenhalter-Haltemittel, das den Bürstenhalter hält, vorgesehen.

Aus der DE 10 2010 016930 A1 ist eine rotierende elektrische Maschine für Fahrzeuge bekannt, die einen Rotor, einen Stator, einen vorderen Gestellrahmen und einen hinteren Gestellrahmen, welche den Rotor und den Stator abstützen, besitzt. Ferner ist eine Bürsteneinheit, welche ein Paar von Bürsten aufnimmt und die Schleifringe abdeckt, vorgesehen sowie ein Leistungsumformer, welcher einen Betrieb der Umwandlung der elektromotorischen Wechselstromkraft, die in einer Statorwicklung induziert wird, in Gleichstrom, und/oder einem Betrieb der Umwandlung der in einer Batterie gespeicherten Gleichstromleistung in Wechselstrom zur Speisung der Statorwicklung durchführt, fernerhin eine rückwärtige Abdeckung, welche den Leistungsumformer abdeckt, sowie einen Kühlluftzuführungskanal, welcher die Verbindung zwischen einer Außenseite der rückwärtigen Abdeckung und der Bürsteneinheit herstellt. Die Bürsteneinheit besitzt eine Öffnung, die auf der Kühllüfterseite vorgesehen ist, sowie eine Öffnung, welche an einem Ende des Kühlluftzuführungskanals vorgesehen ist.

In der JP 2002 130192 A wird zur Kühlung eines Kommutators und einer Bürste mittels eines motorgetriebenen Luftgebläses, vorgeschlagen, dass in dem motorgetriebenen Luftgebläse mit einem an einer Rotorwelle befestigten Rotor und einem Stator ein Durchgangsteil zum direkten Einleiten eines Teils der von einem Luftgebläse geblasenen Außenluft in die Nähe des Kommutators angeordnet ist. Dem Rotor gegenüberliegend ist der Kommutator auf der Rotorwelle angeordnet und richtet elektrische Energie auf eine Spule des Rotors, wobei sich das Luftgebläse zusammen mit der Rotorwelle dreht.

Aus der DE 853 474 C ist eine elektrische Maschine mit Kommutator und eingebauten Lüfter bekannt, der die kühle Luft über den Kommutator durch die Maschine zu Austrittsöffnungen im Gehäuse fördert, wobei die Bürstenbrücke als Leitvorrichtung ausgebildet ist, durch die die durch stirnseitige Öffnungen im Gehäuse eintretende kühle Luft an den Kommutator herangeführt wird.

Der Erfindung liegt die Aufgabe zu Grunde, eine Schleifringeinheit derart zu verbessern, dass auf einfache und kostengünstige Weise eine gleichmäßige Temperaturverteilung der Schleifringeinheit und somit eine möglichst effektive Kühlung der elektrischen Maschine ermöglicht wird.

Diese Aufgabe wird durch eine Schleifringeinheit mit den im Anspruch 1 angegebenen Merkmalen gelöst.

Der Erfindung liegt die Erkenntnis zugrunde, dass das thermische Verhalten einer elektrischen Maschine dadurch optimiert werden kann, dass gezielt Kühlluftleitungen vorgesehen werden, zur gezielten Führung von Kühlluft zu in der Bürstenhaltevorrichtung anordenbaren Schleifringbürsten. Durch derartige Kühlluftleitungen kann das thermische Verhalten der Schleifringeinheit und somit auch der elektrischen Maschine in der Weise optimiert werden, dass die Schleifringeinheit kleiner gewählt werden kann, als dies ohne aktives Kühlsystem, welches durch die an bzw. in der Bürstenhaltevorrichtung vorgesehenen Kühlluftleitungen der Fall wäre. Der zusätzliche Aufwand an Kühlluftleitungen erfordert dabei geringe Materialkosten im Gegensatz zu höheren Materialkosten infolge eines größeren Außenmaßes einer kompletten elektrischen Maschine. Durch die gezielte Kühlung der Schleifringbürsten kommt es zu einer deutlichen Reduktion der Temperaturen in diesem Bereich, so dass durch die niedrigere Temperatur kleinere Baugrößen der Schleifringeinheit und der direkt angrenzenden Komponenten ermöglicht werden. Darüber hinaus kann der Schleifringkörper bzw. die Schleifringeinheit mit mehr Bürsten pro Phase betrieben werden, was sonst ohne direkte und aktive Kühlung der Bürsten nur schwer oder sogar unmöglich wäre. Somit sind bei gleicher Leistungsstufe kleinere Baugrößen möglich.

Vorteilhafte Ausgestaltungsformen sind in den Unteransprüchen enthalten.

Eine gezielte Zuführung von eines Kühlluftstroms zu hitzemäßig stark belasteten Bereichen der Schleifringeinheit insbesondere im Bereich der Schleifringbürsten erfolgt gezielt dadurch, dass die Bürstenhaltevorrichtung Kühlluftkanäle aufweist, die jeweils mindestens eine Eintrittsöffnung zur Sammlung von Kühlluft und jeweils mindestens eine Luftaustrittsöffnung zur Zuführung der in den Luftkanälen gesammelten Kühlluft über die an die Luftaustrittsöffnungen angeschlossenen Kühlluftleitungen zu den jeweils in Bürstentaschen anordenbaren Schleifringbürsten. Hierdurch kommt es zu einem gezielten Zusammenwirken der Kühlluftleitungen mit in der Bürstenhaltevorrichtung angeordneten Kühlluftkanälen.

Der Kühlluftstrom wird auf einfache Weise aufwandsarm dadurch erzielt, dass die Schleifringeinheit einen Lüfter aufweist und/oder mit einem Lüfter koppelbar ist. Dabei ist der insbesondere ohnehin vorhandene Lüfter der elektrischen Maschine zur Erzeugung eines Luftvolumenstroms zur Kühlung der Bürstenhaltevorrichtung vorgesehen ist.

Der Kühlluftstrom wird vorteilhafter Weise dadurch erzielt, dass die Schleifringeinheit ein Schleifringgehäuse aufweist, wobei das Schleifringgehäuse eine Lufteintrittsöffnung aufweist zur Zuführung von Kühlluft über einen Zuluftkanal zum Kühlluftkanal.

Der Kühlluftkanal wird ohne großen Zusatzaufwand dadurch in synergistischer Weise geschaffen, dass der Kühlluftkanal als Teil einer Bürstenbrücke ausgebildet ist. Eine derartige Bürstenbrücke ist meist ohnehin zur Verbindung der einzelnen Bürstenhalter erforderlich.

Eine derartige Doppelfunktionalität in Form einer mechanischen Kopplung sowie als gezielte Luftzuführung wird in einfacher Art und Weise dadurch sichergestellt, dass die Bürstenbrücke einen ersten Teilbereich zur elektrischen Verkabelung der Schleifringbürste und einen zweiten Teilbereich, der als Kühlluftkanal wirkt, aufweist.

Im Folgenden wird die Erfindung anhand der in den Figuren dargestellten Ausführungsbeispiele näher beschrieben und erläutert.

Es zeigen:
- FIG 1: einen Ausschnitt einer Schleifringeinheit mit aktivem Kühlsystem,
- FIG 2: eine Schleifringeinheit mit aktivem Kühlsystem in Gesamtsicht und
- FIG 3: eine Detailansicht einer Bürstenhaltevorrichtung mit Kühlluftkanal und zugehörigen Kühlluftleitungen.

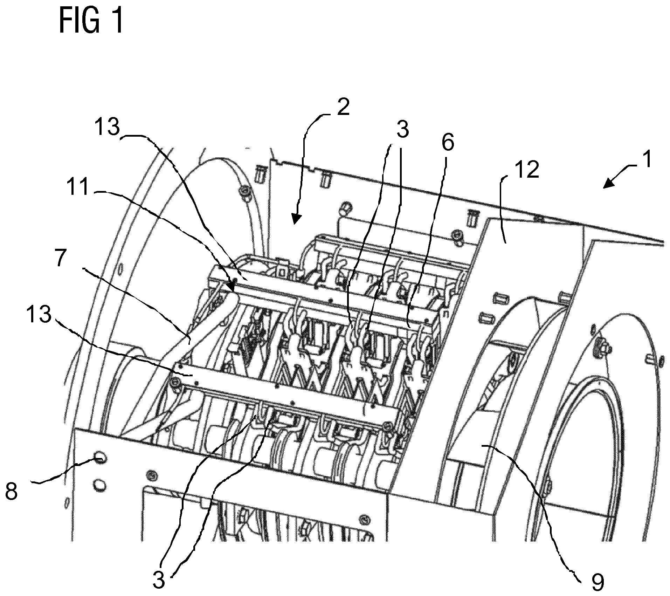

FIG 1 zeigt einen Ausschnitt einer Schleifringeinheit 1 mit aktivem Kühlsystem. Die Schleifringeinheit 1 besteht im Wesentlichen aus einem Schleifringgehäuse 12, in dem eine Bürstenhaltevorrichtung 2 sowie ein Lüfter 9 angeordnet sind. Das Schleifringgehäuse 12 weist im vorderen Bereich eine Lufteintrittsöffnung 8 auf, welche über einen Zuluftkanal 7 mit einem Kühlluftkanal 6 einer Bürstenbrücke 13 in Wirkverbindung gekoppelt ist.

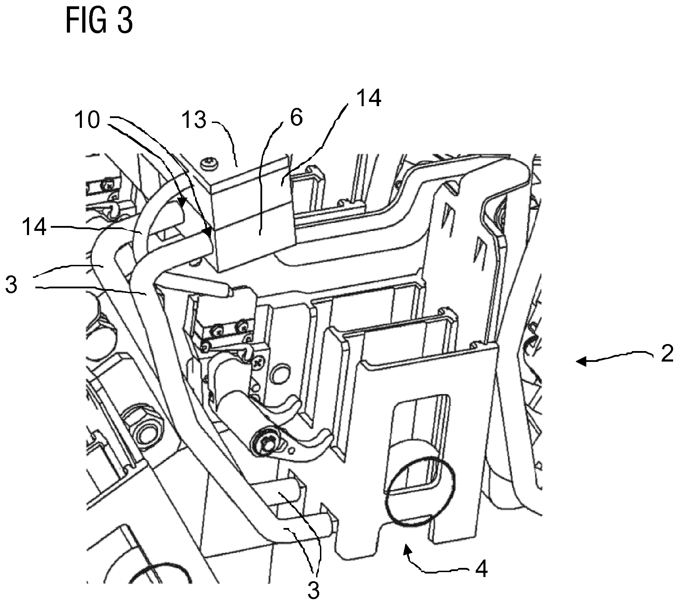

Die Besonderheit der in FIG 1 dargestellten Schleifringeinheit mit aktivem Kühlsystem besteht darin, dass bei der Schleifringeinheit 1 eine gezielte Kühlung, der in FIG 1 aus Gründen der Übersichtlichkeit nicht näher dargestellten Schleifringbürsten, erfolgt. Hierzu wird gezielt Kühlluft über die Lufteintrittsöffnung 8 sowie die daran angeschlossenen Zuluftkanäle 7 an den Kühlluftkanal 6 der Bürstenbrücke 13 geleitet. Dieser Kühlluftvolumenstrom wird dann über Luftaustrittsöffnungen 10 am Kühlluftkanal 6 und die an die Luftaustrittsöffnungen 10 angeschlossenen Kühlluftleitungen 3 weitergeleitet (vgl. auch Fig. 3). Die Kühlluftleitungen 3 lenken diesen Kühlluftstrom direkt an die in FIG 1 nicht weiter dargestellten Schleifringbürsten. Somit entsteht im Zusammenwirken mit dem Lüfter 9, der im Wesentlichen der Abfuhr der erwärmten Luft dient, ein aktives Kühlsystem, so dass Überhitzungen vermieden werden und auch für sämtliche Betriebszustände zulässige Temperaturbereiche erzielt werden.

Die kühle Luft wird somit einerseits über die Kühlluftöffnungen der Schleifringeinheit 1 angesaugt. Der zweite Weg bildet sich über die Zuluftkanäle 7, die über eigene Kühlluftöffnungen in Form des Lufteintritts 8 an der Schleifringeinheit 1 versorgt werden. Aufgrund dieser separaten Zusatzkanäle an der Bürstenbrücke 13 kann jede einzelne Bürste von hier aus auch einzeln mit Kühlluft versorgt werden. Hierzu dienen die eigenen Kühlluftverrohrungen in Form der Kühlluftleitungen 3.

Bei dem in FIG 1 dargestellten Ausführungsbeispiel erfolgt die Zuführung der Kühlluft über den in der Bürstenbrücke 13 integrierten Kühlluftkanal 6. Alternativ könnte eine aktive Kühlluftversorgung auch in die Schleifringkapsel und nicht in die Bürstenbrücke 13 integriert werden. Mit Hilfe dieser Kühlluftführungen kann die Kühlluft nun direkt an jede Kontaktstelle jeder Schleifringbürste im kompletten System gelenkt werden. Hierdurch liegen die Oberflächen der kritischen Teile direkt im zugeführten Kaltluftstrom. Dies wird unterstützt durch den in der Schleifringeinheit 1 standardmäßig enthaltenen Radiallüfter 9. Die Kühlluft wird somit direkt an die "heißen" Stellen des Systems, also an die Schleifringbürsten geführt. Die erwärmte Luft wird nun von dem Schleifringlüfter 9 angesaugt und über den Luftstrom durch das Lüftergehäuse aus dem Schleifringraum in die Umgebung abgeführt. Somit werden direkt die Schleifringbürsten der Schleifringeinheit 1 gekühlt. Die Schleifringlaufflächen und Bürstentemperaturen bleiben durch diese Maßnahmen in einen betriebsgerechten Temperaturbereich und der Betrieb ist gegen Überhitzung geschützt. Somit können also wesentlich kleinere, günstigere Bauteile verwendet werden und dennoch bleibt der problemlose Betrieb gewährleistet.

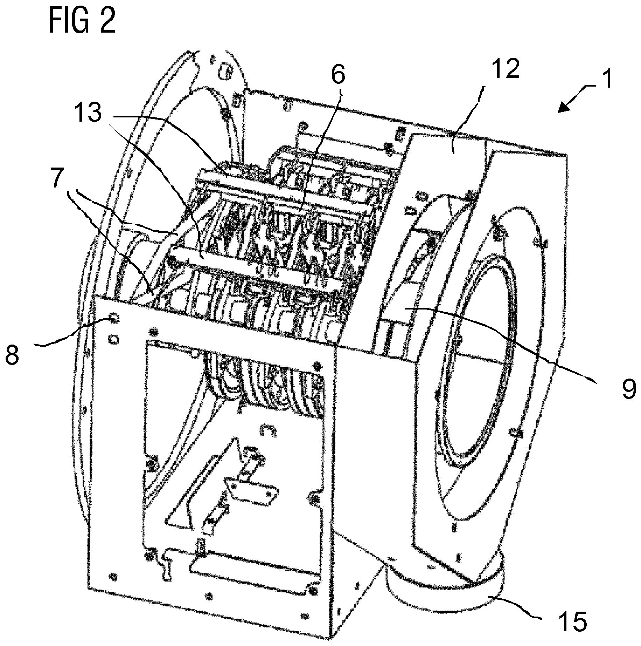

FIG 2 zeigt eine Schleifringeinheit 1 mit aktivem Kühlsystem in der Gesamtansicht. Dabei werden wiederum die bereits im Zusammenhang mit FIG 1 eingeführten Bezugszeichen verwendet, so dass zur Vermeidung von Wiederholungen auch auf die zugehörige Beschreibung zu FIG 1 verwiesen wird. In FIG 2 wird nochmals das Zusammenwirken mit dem Lüfter 9 ersichtlich, der über einen Luftaustritt 15 die erhitzte Luft aus dem Gehäuse 12 der Schleifringeinheit 1 befördert.

FIG 3 zeigt eine Detailansicht einer Bürstenhaltevorrichtung 2 mit Kühlluftkanal 6 und zugehörigen Kühlluftleitungen 3. Wiederum werden die bereits im Zusammenhang mit den Figuren 1 und 2 eingeführten Bezugszeichen verwendet. Aus dieser Detailansicht der FIG 3 wird insbesondere ersichtlich, dass der Kühlluftkanal 6 einen ersten Teilbereich 14 zur elektrischen Verkabelung der Schleifringbürste, die im Bereich einer Bürstentasche 4 angeordnet ist, sowie einen zweiten Teilbereich, der als Kühlluftkanal 6 wirkt, aufweist.

Zusammenfassend betrifft die Erfindung somit eine Schleifringeinheit 1 für eine elektrische Maschine, wobei die Schleifringeinheit 1 zur Aufnahme einer Bürstenhaltevorrichtung 2 vorgesehen ist. Für eine sichere und effektive Kühlung von in der Bürstenhaltevorrichtung 2 anordenbaren Schleifringbürsten wird vorgeschlagen, dass die Bürstenhaltevorrichtung 2 Kühlluftleitungen 3 aufweist zur gezielten Zuführung von Kühlluft zu den in der Bürstenhaltevorrichtung 2 anordenbaren Schleifringbürsten. Die Bürstenhaltevorrichtung 2 Kühlluftkanäle 6 auf, die jeweils mindestens eine Lufteintrittsöffnung 11 zur Sammlung von Kühlluft und jeweils mindestens eine Luftaustrittsöffnung 10 zur Zuführung der in den Luftkanälen gesammelten Kühlluft über die an die Luftaustrittsöffnungen 10 angeschlossenen Kühlluftleitungen 3 zu den jeweils in Bürstentaschen 4 der Bürstenhaltevorrichtung 2 anordenbaren Schleifringbürsten.

## Patentansprüche

1. Schleifringeinheit (1) für eine elektrische Maschine, wobei die Schleifringeinheit (1) zur Aufnahme einer Bürstenhaltevorrichtung (2) vorgesehen ist,
wobei die Bürstenhaltevorrichtung (2) Kühlluftleitungen (3) aufweist zur gezielten Zuführung von Kühlluft zu in der Bürstenhaltevorrichtung (2) anordenbaren Schleifringbürsten,
wobei die Bürstenhaltevorrichtung (2) Kühlluftkanäle (6) aufweist, die jeweils mindestens eine Lufteintrittsöffnung (11) zur Sammlung von Kühlluft und jeweils mindestens eine Luftaustrittsöffnung (10) zur Zuführung der in den Kühlluftkanälen (6) gesammelten Kühlluft über die an die Luftaustrittsöffnungen (10) angeschlossenen Kühlluftleitungen (3) zu den jeweils in Bürstentaschen (4) der Bürstenhaltevorrichtung (2) anordenbaren Schleifringbürsten,
**dadurch gekennzeichnet,**
**dass** die Schleifringeinheit (1) einen Lüfter (9) aufweist und/oder mit einem Lüfter (9) koppelbar ist,
**dass** der Lüfter (9) zur Erzeugung eines Luftvolumenstroms zur Kühlung der Bürstenhaltevorrichtung (2) als aktives Kühlsystem vorgesehen ist,
**dass** der Kühlluftkanal (6) als Teil einer Bürstenbrücke (13) ausgebildet ist,
**dass** die Bürstenbrücke (13) einen ersten Teilbereich zur elektrischen Verkabelung der Schleifringbürste und einen zweiten Teilbereich, der als Kühlluftkanal (6) wirkt, aufweist, und
**dass** die Bürstenbrücke (13) die Luftaustrittsöffnungen (10) zum Anschluss der Kühlluftleitungen (3) zu den jeweils in Bürstentaschen (4) der Bürstenhaltevorrichtung (2) anordenbaren Schleifringbürsten aufweist.

2. Schleifringeinheit (1) nach Anspruch 1,
wobei die Schleifringeinheit (1) Zuluftkanäle (7) aufweist, die über eigene Kühlluftöffnungen in Form einer Lufteintrittsöffnung (8) an der Schleifringeinheit (1) versorgt werden, wobei die Kühlluftleitungen (3) zur Versorgung jeder Schleifringbürste mit Kühlluft vorgesehen sind.

3. Schleifringeinheit (1) nach einem der Ansprüche 1 oder 2,
wobei im Zusammenwirken mit dem Lüfter (9), der im Wesentlichen der Abfuhr der erwärmten Luft dient, ein aktives Kühlsystem entsteht.

4. Schleifringeinheit (1) nach einem der vorhergehenden Ansprüche,
wobei die Schleifringeinheit (1) ein Schleifringgehäuse (12) aufweist, wobei das Schleifringgehäuse (12) die Lufteintrittsöffnung (8) aufweist zur Zuführung von Kühlluft über einen Zuluftkanal (7) zum Kühlluftkanal (6).

5. Elektrische Maschine mit einer Schleifringeinheit (1) nach einem der vorhergehenden Ansprüche.

## Claims

1. Slip ring unit (1) for an electric machine, the slip ring unit (1) being provided to receive a brush holding apparatus (2),
the brush holding apparatus (2) having cooling air lines (3) for the targeted feed of cooling air to slip ring brushes which can be arranged in the brush holding apparatus (2),
the brush holding apparatus (2) having cooling air ducts (6) which in each case at least one air inlet opening (11) for the collection of cooling air and in each case at least one air outlet opening (10) for the feed of the cooling air which is collected in the cooling air ducts (6), via the cooling air lines (3) which are connected to the air outlet openings (10), to the slip ring brushes which can be arranged in each case in brush pockets (4) of the brush holding apparatus (2),
**characterized**
**in that** the slip ring unit (1) has a fan (9) and/or can be coupled to a fan (9),
**in that** the fan (9) is provided for the generation of an air volumetric flow for cooling of the brush holding apparatus (2) as active cooling system,
**in that** the cooling air duct (6) is configured as part of a brush yoke (13),
**in that** the brush yoke (13) has a first part region for electric cabling of the slip ring brush, and a second part region which acts as cooling air duct (6), and
**in that** the brush yoke (13) has the air outlet openings (10) for the connection of the cooling air lines (3) to the slip ring brushes which can be arranged in each case in brush pockets (4) of the brush holding apparatus (2).

2. Slip ring unit (1) according to Claim 1,
the slip ring unit (1) having feed air ducts (7) which are supplied via dedicated cooling air openings in the form of an air inlet opening (8) on the slip ring unit (1), the cooling air lines (3) being provided to supply each slip ring brush with cooling air.

3. Slip ring unit (1) according to either of Claims 1 or 2,
an active cooling system being produced in interaction with the fan (9) which serves substantially to discharge the heated air.

4. Slip ring unit (1) according to one of the preceding claims,
the slip ring unit (1) having a slip ring housing (12), the slip ring housing (12) having the air inlet opening (8) for the feed of cooling air via a feed air duct (7) to the cooling air duct (6).

5. Electric machine with a slip ring unit (1) according to one of the preceding claims.

## Revendications

1. Unité formant bague collectrice (1) destinée à une machine électrique, l'unité formant bague collectrice (1) étant prévue pour recevoir un dispositif porte-balais (2),
le dispositif porte-balais (2) comportant des conduits d'air de refroidissement (3) destinés à amener de manière ciblée de l'air de refroidissement à des balais de bague collectrice qui peuvent être disposés dans le dispositif porte-balais (2), le dispositif porte-balais (2) comportant des canaux d'air de refroidissement (6) qui chacun au moins une ouverture d'entrée d'air (11) destinée à collecter l'air de refroidissement et au moins une ouverture de sortie d'air (10) destinée à amener de l'air de refroidissement, collecté dans les canaux d'air de refroidissement (6), aux balais de bague collectrice, qui peuvent être disposés chacun dans des poches de balais (4) du dispositif porte-balais (2), par le biais des conduits d'air de refroidissement (3) raccordés aux ouvertures de sortie d'air (10),
**caractérisée en ce que**
l'unité de bague collectrice (1) comporte un ventilateur (9) et/ou peut être accouplée à un ventilateur (9),
le ventilateur (9) est prévu comme système de refroidissement actif pour générer un débit d'air volumétrique destiné à refroidir le dispositif porte-balais (2),
le canal d'air de refroidissement (6) est conçu comme partie d'une couronne porte-balais (13),
la couronne porte-balais (13) comporte une première zone partielle destinée au câblage électrique du balai de bague collectrice et une deuxième zone partielle qui sert de canal d'air de refroidissement (6), et
la couronne porte-balais (13) comporte les ouvertures de sortie d'air (10) destinée à raccorder les conduits d'air de refroidissement (3) aux balais de bague collectrice qui peuvent être disposés chacun dans des poches de balai (4) du dispositif porte-balais (2).

2. Unité formant bague collectrice (1) selon la revendication 1,
l'unité formant bague collectrice (1) comportant des canaux d'amenée d'air (7) qui sont alimentés par le biais de leurs propres ouvertures d'air de refroidissement se présentant sous la forme d'une ouverture d'entrée d'air (8) au niveau de l'unité formant bague collectrice (1), les conduits d'air de refroidissement (3) étant prévus pour alimenter chaque balai de bague collectrice en air de refroidissement.

3. Unité formant bague collectrice (1) selon l'une des revendications 1 ou 2,
un système de refroidissement actif étant créé en coopération avec le ventilateur (9) qui sert sensiblement à évacuer l'air chauffé.

4. Unité formant bague collectrice (1) selon l'une des revendications précédentes,
l'unité formant bague collectrice (1) comportant un boîtier de bague collectrice (12), le boîtier de bague collectrice (12) comportant l'ouverture d'entrée d'air (8) destinée à amener de l'air de refroidissement au canal d'air de refroidissement (6) par le biais d'un canal d'amenée d'air (7).

5. Machine électrique comprenant une unité formant bague collectrice (1) selon l'une des revendications précédentes.
